# EUROPÄISCHE PATENTSCHRIFT

(11) **EP 2 683 003 B1**
(45) Veröffentlichungstag und Bekanntmachung des Hinweises auf die Patenterteilung: **20.12.2017**
(21) Anmeldenummer: 12174627.5
(22) Anmeldetag: 02.07.2012
(51) Int. Cl.: H01M 10/14, H01M 10/16, H01M 2/30, H01M 10/04, H01M 2/16, H01M 2/28, H01M 4/76

(54) **Akkumulator, insbesondere Bleiakkumulator**
Battery, in particular lead battery
Accumulateur, notamment batterie au plomb

(43) Veröffentlichungstag der Anmeldung: 08.01.2014
(73) Patentinhaber: HOPPECKE Batterien GmbH & Co. KG., 59929 Brilon (DE)
(72) Erfinder: Kesper, Heinrich, 34508 Willingen (DE)
(74) Vertreter: Rausch Wanischeck-Bergmann Brinkmann

(56) Entgegenhaltungen:
- EP-A1- 0 694 979
- EP-A1- 2 312 673
- CH-A- 364 820
- DE-B3-102005 056 430

## Beschreibung

Die Erfindung betrifft einen Akkumulator, insbesondere in der Ausgestaltung als Bleiakkumulator, mit einer Mehrzahl von positiven und negativen Elektrodenplatten, die einander abwechselnd und unter Belassung eines jeweiligen Spaltraums beabstandet zueinander angeordnet sind, wobei die positiven Elektrodenplatten jeweils mit einem Abstandshalter ausgerüstet sind, wobei ein jeder Abstandshalter zweiteilig ausgebildet ist und jeweils ein kopfseitig der jeweiligen Elektrodenplatte ausgebildetes Kopfteil sowie ein fußseitig der jeweiligen Elektrodenplatte ausgebildetes Fußteil aufweist.

Ein Akkumulator der eingangs genannten Art ist aus dem Stand der Technik an sich gut bekannt, weshalb es eines gesonderten druckschriftlichen Nachweises an dieser Stelle nicht bedarf. Nur beispielhaft sei deshalb als Stand der Technik die CH 364820 benannt, die einen gattungsgemäßen Akkumulator betrifft. Bei diesem vorbekannten Akkumulator kommen zur Anordnung von Akkumulatorenplatten einseitig offene Führungen zum Einsatz, in welche die Akkumulatorenplatten eingeschoben sind. Dabei weisen die Führungen Kontakteinrichtungen zur elektrischen Verbindung mit den Akkumulatorenplatten auf.

Akkumulatoren der eingangs genannten Art verfügen über eine Mehrzahl von Elektrodenplatten, und zwar über positive Elektrodenplatten einerseits und negative Elektrodenplatten andererseits. Die Elektrodenplatten sind in einem Akkumulatorgehäuse angeordnet, das mit einem Elektrolyten befüllt ist. Zur Bestückung des Gehäuses verfügt dieses über eine Öffnung, die im endmontierten Zustand des Akkumulators mittels eines Deckels bevorzugter Weise fluiddicht verschlossen ist.

Die positiven und negativen Elektrodenplatten sind innerhalb des Akkumuiatorgehäuses einander abwechselnd angeordnet. Dabei ist bevorzugter Weise vorgesehen, dass es sich bei den beiden äußeren Elektrodenplatten um jeweils negative Elektrodenplatten handelt.

Die beabstandete Anordnung benachbarter Elektrodenplatten ist erforderlich, damit eine Elektrolytzirkulation gestattet ist. Dabei ist zur Vermeidung einer elektrischen Kontaktierung ein Separator zwischen zwei benachbarten Elektrodenplatten vorgesehen. Zum Zwecke der beanstandeten Anordnung ist es aus dem Stand der Technik bekannt geworden, ein zwei Elektrodenplatten voneinander separierendes Separatorblatt zu verwenden, das auf einer seiner beiden Wirkseiten Rippen trägt. Diese auch als Abstandsrippen zu bezeichnenden Rippen dienen der beabstandeten Anordnung zweier Elektrodenplatten unter gleichzeitiger Ausbildung eines Separators. Es ist dabei in der Regel vorgesehen, dass der Separator und die vom Separator bereitgestellten Rippen einstückig ausgebildet sind.

Aus dem Stand der Technik sind auch Konstruktionen bekannt geworden, wonach zur Abstandsausbildung Netzgewebe zum Einsatz kommen. In diesem Fall ist es besonders bevorzugt, die positive Elektrodenplatte innerhalb eines getaschten Netzschlauches anzuordnen. Auch der Separator kann in diesem Fall bevorzugter Weise als Tasche ausgebildet sein. Diese Ausgestaltung ist insbesondere aus produktionstechnischen Gründen von Vorteil, da die positiven Elektrodenplatten eines Akkumulators vorkonfektioniert ausgebildet und einerseits mit einem Separator und andererseits mit einem als Abstandshalter dienenden Netzgitter ausgerüstet werden können. Ein mit solch ausgestalteten positiven Elektrodenplatten ausgerüsteter Akkumulator ist beispielsweise aus der EP 2 312 673 A1 bekannt geworden.

Aus dem Stand der Technik ist gemäß der EP 0 694 979 A1 desweiteren ein Akkumulator mit Seitenwandrippen bekannt. Gemäß dieser Konstruktion wird in einem Bleiakkumulator mit einem Blockkasten die Einbauweite einer Zelle durch Seitenwandrippen bestimmt, welche den Plattenblock festhalten und die aus einem an die Kastenwand angeformten Steg bestehen, der an seinem in das Kastenabteil hineinragenden Ende beidseitig mit Fortsetzungsstegen versehen ist.

Aus der DE 10 2005 056 430 B3 ist ferner eine Fußrahmenleiste bekannt, die dem Verschließen von Rohrplatten dient, wobei die Fußrahmenleiste einen Grundkörper aufweist, an dem bei bestimmungsgemäßer Anordnung der Fußrahmenleiste endseitig in die Rohre der Rohrplatte eingreifende Vorsprünge angeordnet sind.

Aus der CH 364 820 A ist ein weiterer Akkumulator gemäß dem Stand der Technik bekannt.

Obgleich sich vorbeschriebene Akkumulatorkonstruktionen im alltäglichen Praxiseinsatz bewährt haben, besteht Verbesserungsbedarf, insbesondere mit Blick auf eine noch weiter vereinfachte Herstellung. Darüber hinaus soll die Funktionssicherheit des Akkumulators erhöht werden. Es ist deshalb die **Aufgabe** der Erfindung, einen Akkumulator der eingangs genannten Art dahingehend weiterzuentwickeln, dass insbesondere eine vereinfachte Handhabung während der Akkumulatorherstellung erreicht ist.

Zur **Lösung** dieser Aufgabe wird mit der Erfindung ein Akkumulator der eingangs genannten Art vorgeschlagen, der sich dadurch auszeichnet, dass das Kopfteil und das Fußteil eines jeden Abstandshalters als jeweils separate Bauteile ausgebildet sind und dass ein jeder Abstandshalter jeweils auf die Fuß- bzw. Kopfbereiche benachbarter Elektrodenplatten beschränkt ist.

Der Akkumulator nach der Erfindung verfügt über im Besonderen ausgebildete Abstandshalter zur beabstandeten Anordnung benachbarter Elektrodenplatten. Es ist nach der Erfindung vorgesehen, dass die positiven Elektrodenplatten mit einem entsprechenden Abstandshalter ausgerüstet sind. Dabei ist ein jeder Abstandshalter zweiteilig ausgebildet und verfügt über ein Kopfteil einerseits und ein Fußteil anderseits. Im endmontierten Zustand ist das Kopfteil des Abstandshalters kopfseitig und das Fußteil des Abstandshalters fußseitig der jeweiligen positiven Elektrodenplatte ausgebildet.

Das Kopfteil und das Fußteil eines jeden Abstandshalters sind als jeweils separate Bauteile ausgebildet. Im endmontierten Zustand eines Akkumulators wird so ein freier Spaltraum zwischen benachbarten Elektrodenplatten geschaffen. Dabei ist dieser freie Spaltraum hinsichtlich seines Spaltmaßes definiert festgelegt, und zwar in Entsprechung der geometrischen Abmessungen des Abstandshalters, das heißt dessen Kopfteil und Fußteil.

Der aus Kopfteil und Fußteil gebildete Abstandshalter wird bevorzugter Weise im Rahmen der Akkumulatorherstellung in einem automatisierten Montageverfahren an der jeweiligen Elektrodenplatte angeordnet. In dieser Weise vorbereitete positive Elektrodenplatten sind zur Ausbildung eines endfertigen Akkumulators mit einer entsprechenden Anzahl an negativen Elektrodenplatten innerhalb eines Akkumulatorgehäuses anzuordnen.

Kopf- und Fußteil des erfindungsgemäßen Abstandshalters sind aus einem elektrisch nicht leitenden Material, beispielsweise Kunststoff gebildet.

Der erfindungsgemäße Abstandshalter stützt im endmontierten Zustand des Akkumulators einander benachbarte Elektrodenplatten einerseits im Kopfbereich sowie andererseits im Fußbereich gegenüber einander ab. Hierdurch wird eine sichere und dauerhaft maßhaltige Beabstandung erreicht. Dabei erstreckt sich der erfindungsgemäße Abstandshalter im Unterschied beispielsweise zu vorbekannten Netzkonstruktionen nicht über die gesamte Wirkoberfläche benachbarter Elektrodenplatten, sondern ist auf deren Fuß- bzw. Kopfbereich beschränkt. Damit hilft die erfindungsgemäße Konstruktion zum einen, den zwischen benachbarten Elektrodenplatten ausgebildeten Spaltraum freizuhalten. Zum anderen erweist sich die Akkumulatorherstellung aufgrund der erfindungsgemäßen Konstruktion als sehr viel weniger aufwendig und damit wirtschaftlicher. Im Unterschied zum Stand der Technik ist es insbesondere nicht mehr erforderlich, Elektrodenplatten unter Taschenbildung in Netzschläuche einzubringen.

Die Ausgestaltung eines weitestgehend freien Spaltraums zwischen zwei benachbarten Elektrodenplatten bietet im Übrigen den Vorteil, dass ein im Spaltraum befindlicher Elektrolyt weniger strömungsbehindert ist und deshalb freier zirkulieren kann. In der Konsequenz kann im Unterschied zum Stand der Technik das Spaltmaß verringert und damit die Baugröße des Akkumulators freier variiert werden. Es ist insbesondere möglich, aufgrund eines verringerten Spaltmaßes eine kompaktere Bauform zu erreichen.

Die mit der erfindungsgemäßen Abstandshalterausgestaltung erreichte Abstützung zweier benachbarter Elektrodenplatten sowohl im Fuß- als auch im Kopfbereich gestattet es zudem, die Elektrodenplatten während des Herstellungsprozesses auch aufeinander aufliegend zu handhaben.

Die erfindungsgemäße Ausgestaltung hat im Übrigen ergeben, dass der Spaltraum zwischen zwei benachbarten Elektrodenplatten separatorfrei ausgebildet werden kann. Die erfindungsgemäße Ausgestaltung erlaubt es indes, im Unterschied zu aus dem Stand der Technik bekannten Konstruktionen auf einen zwischen zwei Elektrodenplatten vorgesehenen Separator vollends verzichten zu können. Dies insbesondere deshalb, weil durch die kopfseitige und fußseitige Abstützung benachbarter Elektrodenplatten ein definiertes Spaltmaß bei gleichzeitiger elektrischer Entkopplung geschaffen ist. Eine vollflächige Belegung der Wirkoberflächen einer Elektrodenplatte mit einem Separator ist insoweit nicht mehr erforderlich. Der Herstellungsprozess wird hierdurch noch einmal vereinfacht.

Das Kopfteil eines Abstandshalters ist gemäß einem besonderen Merkmal der Erfindung nach Art einer Haube ausgebildet. Diese ist im endmontierten Zustand über die Kopfleiste der jeweiligen Elektrodenplatte gestülpt. Zum Zwecke einer sicheren Anordnung können entsprechende Rasteinrichtungen vorgesehen sein, die einen sicheren Halt des als Haube ausgebildeten Kopfteils an der Elektrodenplatte gewährleisten. Dabei verfügt die Haube über eine Durchtrittsöffnung für die Fahne der Elektrodenplatte, über welche Fahne in an sich bekannter Weise eine elektrische Kontaktierung erfolgen kann.

Die Ausgestaltung des Kopfteils als Haube erbringt zudem den Vorteil einer Schutzwirkung bezüglich der Kopfleiste der Elektrodenplatte. Im bestimmungsgemäßen Verwendungsfall eines Akkumulators kommt es durch Auflösungserscheinungen bezüglich der aktiven Masse zu Ansammlungen an den Kopfleisten der positiven Elektrodenplatten, was bei einem Zusammenwachsen dieser Ansammlungen zu einem Kurzschluss innerhalb des Akkumulators führen kann. Die erfindungsgemäße Ausgestaltung schafft hier Abhilfe, da durch die als Haube ausgebildeten Kopfteile ein Schutz der Kopfleisten erreicht ist, was etwaigen Zusammenwachsungen entgegensteht. Die Gefahr von Kurzschlüssen aufgrund von zusammenwachsenden Kopfleisten bestehen bei einem Abstandshalter nach der Erfindung nicht, so dass sich die erfindungsgemäße Konstruktion auch insofern als vorteilhaft erweist, als dass sie zur Funktionssicherheit des Akkumulators beiträgt.

Das Fußteil eines Abstandshalters weist gemäß einem weiteren Merkmal der Erfindung Abstandsstücke auf, die an einer Fußrahmenleiste der Elektrodenplatte ausgebildet ist.

Diese Abstandsstücke können gemäß einer ersten Alternative der Erfindung einstückig mit der Fußrahmenleiste ausgebildet sein. Gemäß einer zweiten Alternative ist vorgesehen, dass die Abstandsstücke als zur Fußrahmenleiste separate Bauteile ausgebildet sind, die jeweils einen Verbindungsabschnitt zur vorzugsweisen lösbaren Anordnung an der Fußrahmenleiste aufweisen.

Die Fußrahmenleiste besteht aus Kunststoff und bildet in an sich bekannter Weise den fußseitigen Abschluss einer positiven Elektrodenplatte.

Die Abstandshalter des Fußteils können als einstückiger Teil dieser Fußrahmenleiste ausgebildet sein. Bevorzugt ist indes eine Ausgestaltung, der gemäß die Abstandsstücke als separate Bauteile zur Fußrahmenleiste ausgebildet und zur endfertigen Ausgestaltung des Akkumulators an dieser anzuordnen sind. Dabei kann die Anzahl der Abstandsstücke wahlweise vorgegeben werden, ebenso wie ihre relative Lage an der Fußrahmenleiste. Dabei ist es bevorzugt, je Wirkoberfläche einer Elektrodenplatte wenigstens zwei Abstandsstücke vorzusehen. Auf diese Weise wird eine sichere und maßhaltige Beabstandung zweier benachbarter Elektrodenplatten erreicht. Je nach Größe der Elektrodenplatten können auch mehr als zwei Abstandsstücke vorgesehen sein.

Was die Positionierung der Abstandsstücke angeht, so ist eine randseitige Ausgestaltung bevorzugt. Bei mehr als zwei Abstandsstücken ist ein im Wesentlichen gleicher Abstand zwischen aufeinander nachfolgenden Abstandsstücken bevorzugt.

Gemäß einer Alternative der Erfindung kann vorgesehen sein, dass die Abstandsstücke auf beiden Großflächen der Elektrodenplatten wirkende Fortsätze aufweisen. Diese Ausgestaltung hat den Vorteil, dass ein Abstandsstück zu beiden Großflächen, das heißt zu beiden Wirkflächen einer Elektrodenplatte reichende Fortsätze bereitstellt, so dass es der Anordnung nur zweier Abstandsstücke bedarf, um eine bestimmungsgemäße Beabstandung sowohl hinsichtlich der einen Großfläche als auch hinsichtlich der anderen Großfläche zu erreichen.

Weitere Merkmale und Vorteile der Erfindung ergeben sich aus der nachfolgenden Beschreibung anhand der Figuren. Dabei zeigen
- Figur 1: in einer schematischen Darstellung einen Akkumulator nach der Erfindung;
- Figur 2: in einer schematisch perspektivischen Darstellung eine positive Elektrodenplatte eines Akkumulators nach der Erfindung;
- Figur 3: in einer schematischen Perspektivansicht das Kopfteil eines Abstandshalters;
- Figur 4: das Kopfteil nach Figur 3 in einer Seitenansicht;
- Figur 5: das Kopfteil nach Figur 3 in einer geschnittenen Seitenansicht;
- Figur 6: ausschnittsweise in einer schematischen Perspektivdarstellung die Fußrahmenleiste eines erfindungsgemäßen Akkumulators;
- Figur 7: in einer schematischen Perspektivdarstellung ein Abstandsstück gemäß einer ersten Ausführungsform;
- Figur 8: in einer Perspektivdarstellung ein Abstandsstück gemäß einer zweiten Ausführungsform;
- Figur 9: ein Abstandsstück nach Figur 8 in Seitenansicht;
- Figur 10: ein Abstandsstück nach Figur 8 in Draufsicht von unten;
- Figur 11: in einer schematischen Perspektivdarstellung ein Abstandsstück gemäß einer dritten Ausführungsform und
- Figur 12: in einer schematischen Perspektivdarstellung eine positive Elektrodenplatte nach der Erfindung.

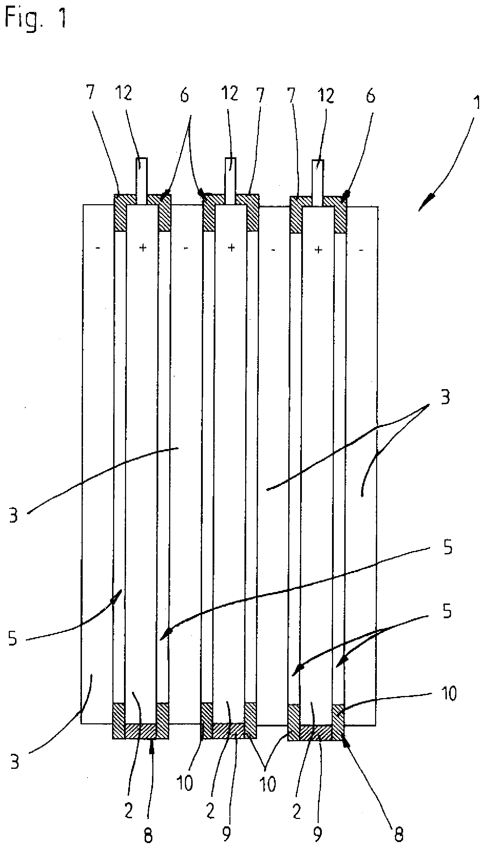

Ein Akkumulator 1 ist in rein schematischer Darstellung in Figur 1 dargestellt. Er verfügt über positive Elektrodenplatten 2 einerseits und negative Elektrodenplatten 3 andererseits, die einander abwechselnd und unter Belassung eines jeweiligen Spaltraums 5 beabstandet zueinander angeordnet sind. Dieser Aufbau eines Akkumulators 1 ist aus dem Stand der Technik an sich bekannt.

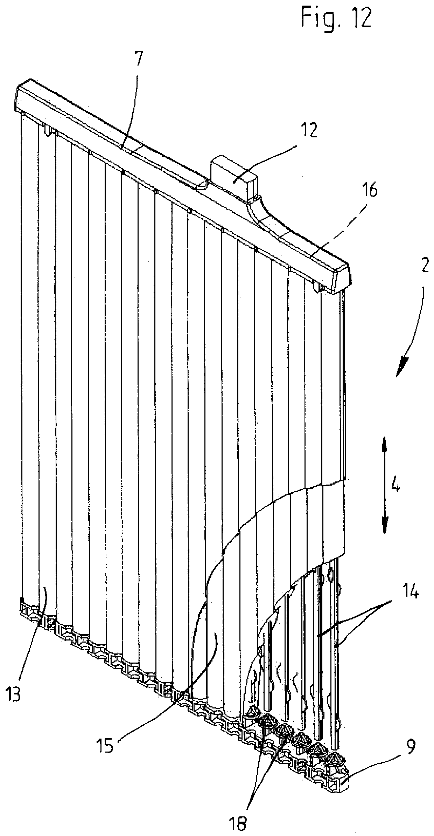

Figur 12 zeigt in schematisch perspektivischer Darstellung eine positive Elektrodenplatte 2 nach der Erfindung. Wie diese Darstellung erkennen lässt, besitzt die positive Elektrodenplatte 2 eine Kopfleiste 16, die eine Mehrzahl einzelner Stäbe 14 miteinander verbindet. Zum Zwecke der elektrischen Kontaktierung ist die Kopfleiste 16 mit einer Fahne 12 ausgerüstet.

Die Stäbe 14 sind innerhalb einer Rohrtasche 13 aus einem Vliesmaterial angeordnet. Von der Tasche 13 ist ferner die aktive Masse 15 aufgenommen, die die Stäbe 14 umgibt.

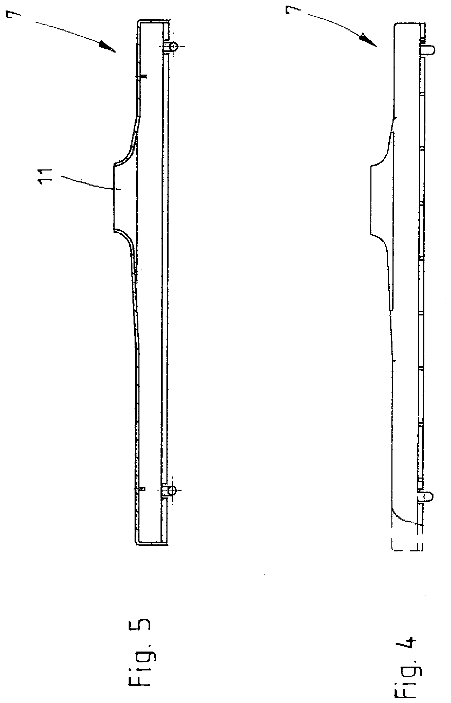

Zur Beabstandung zweier benachbarter Elektrodenplatten 2 und 3 dient erfindungsgemäß ein Abstandshalter 6, wie er in den Figuren 1 bis 11 gezeigt ist.

Der Abstandshalter 6 verfügt, wie insbesondere die Darstellung nach Figur 1 erkennen lässt, über ein Kopfteil 7 einerseits und ein Fußteil 8 andererseits. Dabei ist je positiver Elektrodenplatte 2 ein Abstandshalter 6, mithin ein Kopfteil 7 und ein Fußteil 8 vorgesehen.

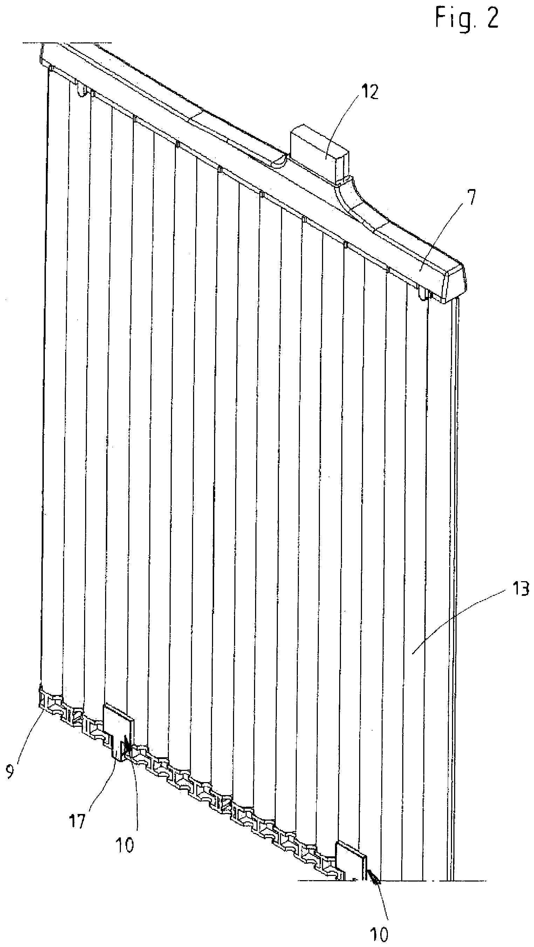

Das Kopfteil 7 ist nach Art einer Haube ausgebildet, die über die Kopfleiste 16 der Elektrodenplatte 2 gestülpt ist. Dieser Sachzusammenhang ergibt sich insbesondere aus der Darstellung nach Figur 2.

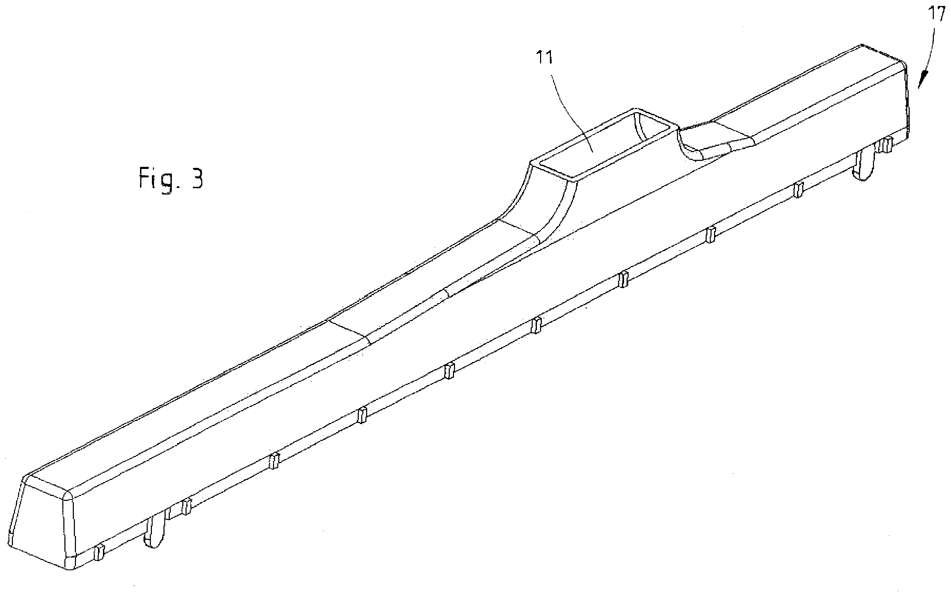

Die Figuren 3, 4 und 5 lassen in unterschiedlichen Ansichten das als Haube ausgebildete Kopfteil 7 erkennen. Im endmontierten Zustand ist durch die Haube die Kopfleiste 16 vollständig abgedeckt. Zur elektrischen Kontaktierung dient in an sich bekannter Weise die von der Kopfleiste 16 getragene Fahne 12, die durch eine dafür vorgesehene Durchtrittsöffnung der Haube hindurchragt, wie insbesondere die Darstellung nach Figur 2 erkennen lässt.

Das Fußteil 8 des Abstandshalters 6 ist im gezeigten Ausführungsbeispiel durch eine Fußrahmenleiste 9 einerseits sowie durch daran angeordnete Abstandsstücke 10 andererseits gebildet.

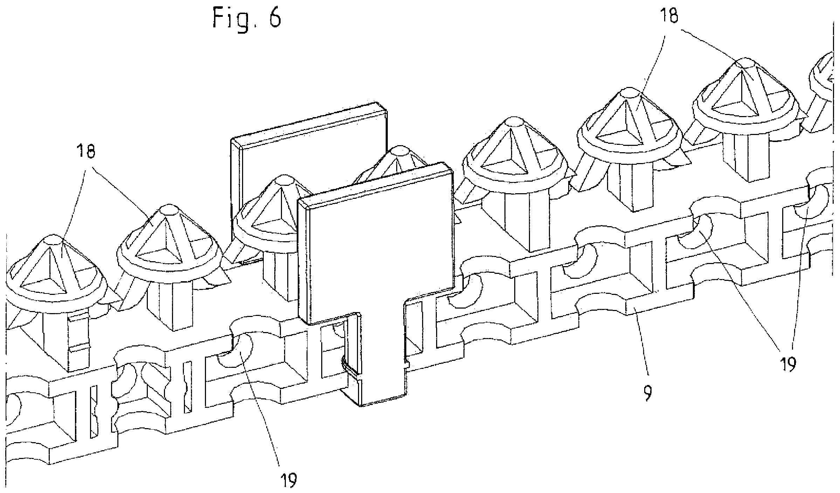

Figur 6 lässt die Fußrahmenleiste 9 nach der Erfindung in einer schematisch perspektivischen Darstellung erkennen. Wie dieser Darstellung zu entnehmen ist, verfügt die Fußrahmenleiste 9 über Ankerelemente 18. Diese Ankerelemente 18 dienen der Fixierung der Fußrahmenleiste 9 an der Rohrtasche 13. Die Fußrahmenleiste 9 verfügt zudem über Öffnungen 19. Diese Öffnungen 19 dienen der Anordnung von Abstandsstücken 10 an der Fußrahmenleiste 9.

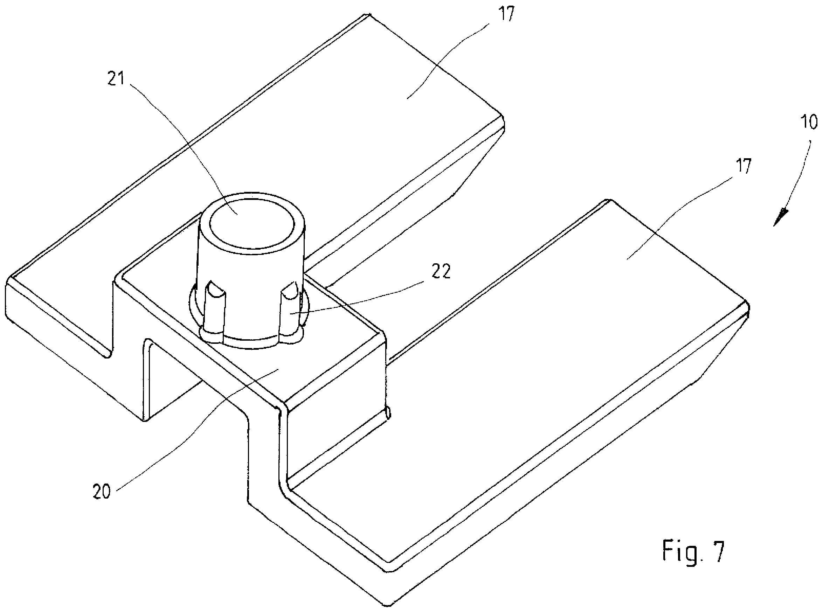

Ein solches Abstandsstück 10 ist gemäß einer ersten Ausführungsform in Figur 7 in schematisch perspektivischer Darstellung gezeigt. Das Abstandsstück 10 verfügt über eine Basis 20, die einen Verbindungsabschnitt 21 trägt. Im gezeigten Ausführungsbeispiel ist dieser Verbindungsabschnitt 21 nach Art eines Bolzens korrespondierend zu den in der Fußrahmenleiste 9 vorgesehenen Öffnungen 19 ausgebildet. Zum Zwecke einer kraftschlüssigen Anordnung verfügt der Verbindungsabschnitt 21 über Anformungen 22.

Ein Abstandsstück 10 verfügt ausgehend von seiner Basis 20 über Fortsätze 17. Im endmontierten Zustand sind diese Fortsätze 17 zur Abstandswahrung zwischen zwei benachbarten Elektrodenplatten 2 und 3 angeordnet, wie dies die Darstellung nach Figur 1 erkennen lässt.

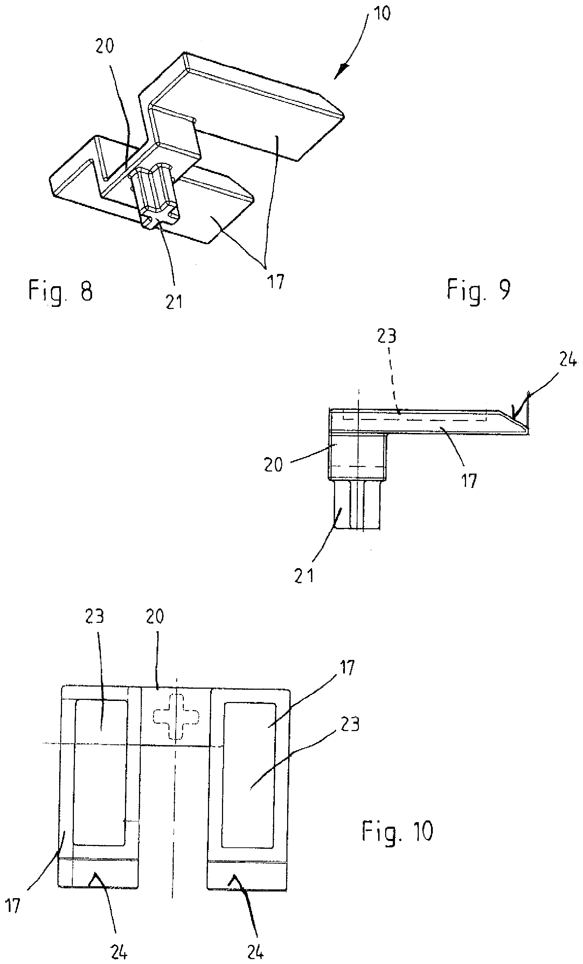

Eine alternative Ausführung hinsichtlich des Abstandsstückes 10 zeigen die Figuren 8, 9 und 10. Gemäß dieser Ausführungsform kommt ein im Querschnitt Kreuz-förmig ausgebildeter Verbindungsabschnitt 21 zum Einsatz. Diese Querschnittsausgestaltung stellt eine verdrehsichere Anordnung des Abstandsstücks 10 an einer Fußrahmenleiste 9 sicher.

Zum Zwecke der Materialeinsparung sind die Fortsätze 17 jeweils mit einer Ausnehmung 23 ausgebildet. Die Fortsätze 7 tragen zudem in ihrem der Basis 20 gegenüberliegenden Endabschnitt eine Schrägfläche 24. Diese Schrägfläche 24 vereinfacht im endmontierten Zustand einer positiven Elektrodenplatte das Einfädeln einer benachbarten negativen Elektrodenplatte.

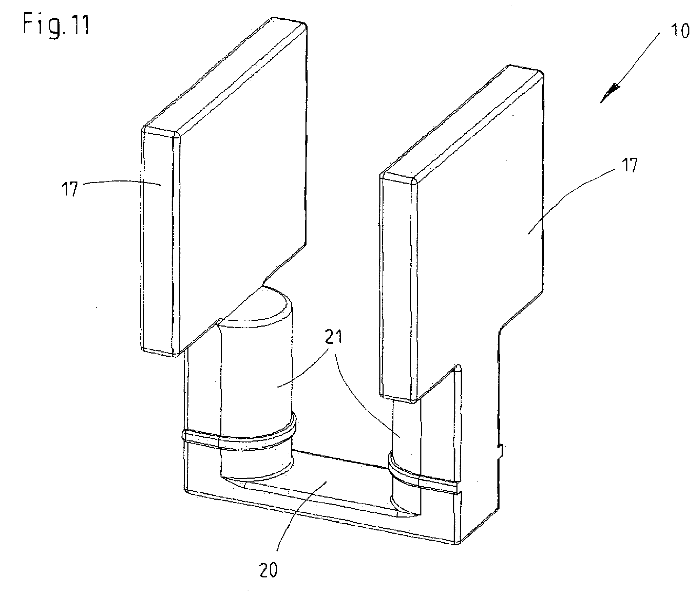

Eine weitere Ausführungsform des Abstandsstückes 10 ist in Figur 11 dargestellt. Gemäß dieser Ausführungsvariante verfügt das Abstandsstück 10 über zwei Fortsätze 17, wobei ein jeder Fortsatz 17 auf einer der Großoberflächen der Elektrodenplatte 2 zur Wirkung kommt.

Figur 2 lässt eine positive Elektrodenplatte 2 nach der Erfindung im endmontierten Zustand erkennen. Der Abstandshalter 6 umfasst einerseits das Kopfteil 7 sowie andererseits das Fußteil 8. Dabei besteht das Fußteil 8 seinerseits aus der Fußrahmenleiste 9 und den daran angeordneten Abstandsstücken 10. Es sind insgesamt vier Abstandsstücke 10 vorgesehen, zwei auf der einen Seite der positiven Elektrodenplatte 2 und zwei auf der in Figur 2 nicht dargestellten, anderen Seite der positiven Elektrodenplatte 2. Anstelle vier solcher in Figur 2 dargestellten Abstandsstücke 10 könnten auch zwei Abstandsstücke 10 der Ausgestaltungsform nach Figur 11 zum Einsatz kommen.

### Bezugszeichen:

- 1: Akkumulator
- 2: positive Elektrodenplatte
- 3: negative Elektrodenplatte
- 4: Längsrichtung
- 5: Spaltraum
- 6: Abstandshalter
- 7: Kopfteil
- 8: Fußteil
- 9: Fußrahmenleiste
- 10: Abstandsstück
- 11: Durchtrittsöffnung
- 12: Fahne
- 13: Rohrtasche
- 14: Stab
- 15: aktive Masse
- 16: Kopfleiste
- 17: Fortsatz
- 18: Ankerelement
- 19: Öffnung
- 20: Basis
- 21: Verbindungsabschnitt
- 22: Anformung
- 23: Ausnehmung
- 24: Schrägfläche

## Patentansprüche

1. Akkumulator, insbesondere Bleiakkumulator, mit einer Mehrzahl von positiven und negativen Elektrodenplatten (2, 3), die einander abwechselnd und unter Belassung eines jeweiligen Spaltraumes (5) beabstandet zueinander angeordnet sind, wobei die positiven Elektrodenplatten (2) jeweils mit einem Abstandshalter (6) ausgerüstet sind, wobei ein jeder Abstandshalter (6) zweiteilig ausgebildet ist und jeweils ein kopfseitig der jeweiligen Elektrodenplatte (2) ausgebildetes Kopfteil (7) sowie ein fußseitig der jeweiligen Elektrodenplatte (2) ausgebildetes Fußteil (8) aufweist, **dadurch gekennzeichnet, dass** das Kopfteil und das Fußteil eines jeden Abstandshalters (6) als jeweils separate Bauteile ausgebildet sind und dass ein jeder Abstandshalter (6) jeweils auf die Fuß- bzw. Kopfbereiche benachbarter Elektrodenplatten (2) beschränkt ist.

2. Akkumulator nach Anspruch 1, **dadurch gekennzeichnet, dass** der jeweilige Spaltraum (5) zwischen einer positiven und einer negativen Elektrodenplatte (2, 3) separatorfrei ausgebildet ist.

3. Akkumulator nach Anspruch 1 oder 2, **dadurch gekennzeichnet, dass** das Kopfteil (7) eines Abstandshalters (6) nach Art einer Haube ausgebildet ist, die über die Kopfleiste (16) einer jeweiligen Elektrodenplatte (2) gestülpt ist.

4. Akkumulator nach Anspruch 3, **dadurch gekennzeichnet, dass** die Haube eine Durchtrittsöffnung (11) für die Fahne (12) der Elektrodenplatte (2) aufweist.

5. Akkumulator nach einem der vorgehenden Ansprüche, **dadurch gekennzeichnet, dass** das Fußteil (8) eines Abstandshalters (6) an der Fußrahmenleiste (9) der Elektrodenplatte (2) ausgebildete Abstandsstücke (10) aufweist.

6. Akkumulator nach Anspruch 5, **dadurch gekennzeichnet, dass** die Abstandsstücke (10) und die Fußrahmenleiste (9) einstückig ausgebildet sind.

7. Akkumulator nach Anspruch 5, **dadurch gekennzeichnet, dass** die Abstandsstücke als zur Fußrahmenleiste (9) separate Bauteile ausgebildet sind, die jeweils einen Verbindungsabschnitt (21) zur vorzugsweisen lösbaren Anordnung an der Fußrahmenleiste (9) aufweisen.

8. Akkumulator nach einem der vorgehenden Ansprüche 5 bis 7, **dadurch gekennzeichnet, dass** die Abstandsstücke (10) jeweils auf beiden Großflächen der Elektrodenplatte (2) wirkende Fortsätze (17) aufweisen.

## Claims

1. An accumulator, in particular a lead accumulator, comprising a plurality of positive and negative electrode plates ((2, 3) which are spaced from each other in an alternating manner while leaving a respective gap space (5), wherein the positive electrode plates (2) are respectively equipped with a spacer (6), wherein each spacer (6) is constructed by two pieces and respectively comprises a head piece (7) formed on the head side of the respective electrode plate (2) and a foot piece (8) formed on the foot side of the respective electrode plate (2), **characterized in that** the head piece and the foot piece of each spacer (6) are designed as respectively separate structural elements and that each spacer (6) is respectively limited to the foot or head regions of adjacent electrode plates (2).

2. An accumulator according to claim 1, **characterized in that** the respective gap space (5) between a positive and a negative electrode plate (2, 3) is formed without a separator.

3. An accumulator according to claim 1 or 2, **characterized in that** the head piece (7) of a spacer (6) is formed like a hood which is put over the top edge (16) of a respective electrode plate (2).

4. An accumulator according to claim 3, **characterized in that** the hood comprises a through hole (11) for the suspension lug (12) of the electrode pilate (2).

5. An accumulator according to one of the preceding claims, **characterized in that** the foot piece (8) of a spacer (6) comprises spacing elements (10) formed on the foot frame edge (9) of the electrode plate (2).

6. An accumulator according to claim 5, **characterized in that** the spacing elements (10) and the foot frame edge (9) are formed in one piece.

7. An accumulator according to claim 5, **characterized in that** the spacing elements (10) are designed as separate structural elements with respect to the foot frame edge (9), which structural elements respectively comprise a connecting section (21) for the preferably detachable arrangement on the foot frame edge (9).

8. An accumulator according to one of the preceding claims 5 through 7, **characterized in that** the spacing elements (10) comprise projections (17) which respectively act on both large surfaces of the electrode plate (2).

## Revendications

1. Accumulateur, notamment accumulateur au plomb, comprenant une pluralité de plaques d'électrode (2, 3) positive et négative, qui sont espacées l'une de l'autre d'une manière alternante en laissant un espace de séparation respectif (5), les plaques d'électrode positive (2) étant chacune munies d'un écarteur (6), chaque écarteur (6) étant réalisé en deux parties et comprenant chacun une partie de tête (7) formée sur le côté de tête de la plaque d'électrode (2) respective ainsi qu'une partie de pied (8) formée sur le côté de pied de la plaque d'électrode respective (2), **caractérisé en ce que** la partie de tête et la partie de pied de chaque écarteur (6) sont respectivement configurées comme des composants séparés et que chaque écarteur (6) est respectivement limité aux régions de pied ou aux régions de tête des plaques d'électrode (2) adjacentes.

2. Accumulateur selon la revendication 1, **caractérisé en ce que** l'espace de séparation respectif (5) entre une plaque d'électrode positive et une plaque d'électrode négative (2, 3) est formé sans séparateur.

3. Accumulateur selon la revendication 1 ou la revendication 2, **caractérisé en ce que** la partie de tête (7) d'un écarteur (6) est formée à la manière d'un capot qui est mis sur la barre supérieure (16) d'une plaque d'électrode respective (2).

4. Accumulateur selon la revendication 3, **caractérisé en ce que** le capot comprend une ouverture de passage (11) pour la languette (12) de la plaque d'électrode (2).

5. Accumulateur selon l'une des revendications précédentes, **caractérisé en ce que** la partie de pied (8) d'un écarteur (6) comprend des éléments écarteurs (10) formés sur la barre de cadre de pied (9) de la plaque d'électrode (2).

6. Accumulateur selon la revendication 5, **caractérisé en ce que** les éléments écarteurs (10) et la barre de cadre de pied (9) sont formés d'un seul tenant.

7. Accumulateur selon la revendication 5, **caractérisé en ce que** les éléments écarteurs sont configurés comme des composants séparés par rapport à la barre de cadre de pied (9), qui comprennent chacun une partie de liaison (21) pour les disposer de préférence de manière amovible sur la barre de cadre de pied (9).

8. Accumulateur selon l'une des revendications précédentes 5 à 7, **caractérisé en ce que** les éléments écarteurs (10) comprennent chacun des extensions (17), qui agissent sur les deux grandes surfaces de la plaque d'électrode (29.
